# EUROPÄISCHE PATENTANMELDUNG

(11) **EP 4 703 851 A1**
(43) Veröffentlichungstag der Anmeldung: **04.03.2026**
(21) Anmeldenummer: 24211460.1
(22) Anmeldetag: 07.11.2024
(51) Int. Cl.: G06F 3/01, G06Q 50/08, G02B 27/01

(54) **VERFAHREN ZUM AUSFÜHREN VON HANDWERKERARBEITSLEISTUNGEN AUF EINER BAUSTELLE**

(30) Priorität: 26.08.2024 US 202418815004
(71) Anmelder: Weber, Dirk, 30165 Hannover (DE)
(72) Erfinder: Weber, Dirk, 30165 Hannover (DE)
(74) Vertreter: Jabbusch, Matthias

(57) **Zusammenfassung**

Bei einem Verfahren zum Ausführen von Handwerkerarbeitsleistungen auf einer Baustelle im Bereich zumindest eines Gebäudes, bei dem oberhalb einer Grundebene des Gebäudes an dem Gebäude zumindest eine Markierung angebracht wird, ist vorgesehen, dass auf die Markierung oder anstelle der Markierung ein Mini-Personalcomputer an dem Gebäude angebracht wird, der über ein Datennetz mit zumindest einer Datenbrille verknüpft ist, die von einem Handwerker im Baustellenbereich getragen wird.

## Beschreibung

Die Erfindung betrifft ein Verfahren zum Ausführen von Handwerkerarbeitsleistungen auf einer Baustelle im Bereich zumindest eines Gebäudes, bei dem oberhalb einer Grundebene des Gebäudes an dem Gebäude eine Markierung angebracht wird.

Bei der Ausführung von Handwerkerarbeitsleistungen auf Baustellen arbeiten voneinander verschiedene Gewerke miteinander. Viele dieser Gewerke müssen zum Beispiel in Räumen des Gebäudes Arbeiten vornehmen. Dies können Elektriker sein, die in den Räumen des Gebäudes Verteilungsdosen und Kabel verlegen müssen. Es kann sich aber auch um Installateure handeln, die Heizungen und Heizungsleitungen oder Frischwasserleitungen verlegen.

Bei diesen Handwerkerarbeitsleistungen muss maßgenau gearbeitet werden. Leitungen oder Kabel sind dort zu verlegen, wo zum Beispiel ein Architekt sie vorgesehen hat. Im Stand der Technik wird mit Zeichnungen auf Papier oder auf Handheld-Datengeräten gearbeitet, um Vorgaben des Architekten auf das Gebäude zu übertragen. An Wänden des Gebäudes werden entsprechende Linien gezogen, anschließend erfolgt z.B. eine Fräsung.

Bei diesen Arbeiten wird häufig von einer Markierung ausgegangen. Diese Markierung wird oberhalb einer Grundebene des Gebäudes an dem Gebäude angebracht, bei Arbeiten in einem Raum des Gebäudes beispielsweise in einer Höhe von einem Meter oberhalb Estrich. Ausgehend von dieser Markierung können dann mit Hilfe von Messeinrichtungen Punkte markiert und Linien gezogen werden.

Der Erfindung liegt die Aufgabe zugrunde, ein Verfahren der eingangs genannten Gattung aufzuzeigen, mit dem das Ausführen von Handwerkerarbeitsleistungen auf Baustellen erleichtert wird.

Diese Aufgabe ist erfindungsgemäß dadurch gelöst, dass auf die Markierung oder anstelle der Markierung ein Mini-Personalcomputer an dem Gebäude angebracht wird, der über ein Datennetz mit zumindest einer Datenbrille verknüpft ist, die von einem Handwerker im Baustellenbereich getragen wird.

Auch bei dem Ausführen von Handwerkerarbeitsleistungen nach dem erfindungsgemäßen Verfahren wird von der Markierung an dem Gebäude ausgegangen. Diese Markierung kann bereits zeichnerisch eingebracht werden, erfindungsgemäß wird dann ein Mini-Personalcomputer auf die Markierung gesetzt und am Gebäude angebracht. Der Mini-Personalcomputer kann aber auch zugleich die Markierung selbst ausbilden, er wird dann lagerichtig oberhalb der Grundebene des Gebäudes, beispielsweise oberhalb einer Estrichebene in einem Raum des Gebäudes, verortet und an dem Gebäude, beispielsweise an einer Wand des Gebäudes, angebracht.

Der die Handwerkerarbeitsleistungen ausführende Handwerker trägt im Baustellenbereich eine Datenbrille. Diese Datenbrille ist über ein Datennetz mit dem Mini-Personalcomputer verknüpft. Von dem Mini-Personalcomputer können dem Handwerker somit Informationen übermittelt werden, die dem Handwerker bei seiner Ausführung der Handwerkerarbeitsleistungen helfen.

Neben einer Datenbrille kann der Mini-Personalcomputer (Mini-PC) auch mit einem Handheld-Datengerät verknüpft sein. Entsprechende Informationen werden dann auch auf das Datengerät übertragen.

Nach einer Weiterbildung der Erfindung ist vorgesehen, das ausgehend vom Mini-PC in Datenbrille und/oder vom Datengerät Hilfslinien, vorzugsweise x-, y- und z-Achsen, dargestellt werden. Der Handwerker sieht in seiner Datenbrille senkrecht aufeinander stehende Achsen, die ihm bei der Verlegung von Kabeln oder Rohren helfen. Die Achsen werden vom Mini-PC erzeugt und in Datenbrille und/oder Datengerät angezeigt. Die Hilfslinien können zur Orientierung dienen, von diesen kann in der Datenbrille abgemessen werden, diesen kann zugeordnet werden.

Nach einer nächsten Weiterbildung der Erfindung ist vorgesehen, dass eine Datenbrille mit einem Projektor mit Projektion auf einen Bereich zumindest eines Brillenglases zum Darstellen von einzubauenden Werkstücken verwendet wird. Der Handwerker hat mit seiner Datenbrille bereits eine richtige Orientierung im Raum des Gebäudes, indem er Arbeiten durchzuführen hat. Mit der weiterentwickelten Datenbrille kann er einen Projektor dieser Datenbrille dazu nutzen, auf sich einen Bereich eines Brillenglases Werkstücke darstellen zu lassen, die einzubauen sind. Der Projektor projiziert auf das Brillenglas und kann auf diese Weise Bilder auf dem Brillenglas erzeugen, die dann von dem die Brille Tragenden erkannt werden. So ist es möglich, auf das Brillenglas Bilder von einzubauenden Werkstücken zu projizieren, so dass der Handwerker in seiner Datenbrille erkennt, welches Werkstück jetzt an welcher Stelle einzubauen ist. Das Werkstück kann in richtiger Ausrichtung und richtiger Zuordnung zu anderen Werkstücken dargestellt werden. Dabei ist es auch möglich, einzusetzende Werkzeuge darzustellen und auch Wirkrichtungen der Werkzeuge darzustellen. Es kann beispielsweise eine Zange dargestellt werden und aufgezeigt werden, ob diese mit dem Uhrzeigersinn zu drehen ist oder entgegen des Uhrzeigersinns.

Nach einer nächsten Weiterbildung der Erfindung ist vorgesehen, dass der Mini-PC mit Expertennetzen mit BIM und mit KI verknüpft wird. Ein Raum des Gebäudes, in dem Arbeitsleistungen durchzuführen sind, kann zunächst gescannt werden, um Raumgrößen, Längen und Referenzpunkte zu erfassen. Diese Informationen können über mehrere Etagen eines Gebäudes hinweg miteinander verbunden werden. Im Kontext des Building Information Modelling (BIM) wird eine Markierung als digitaler fest eingebauter Referenzpunkt auf der Baustelle platziert, von dem aus sämtliche Montagepunkte im BIM zugänglich sind.

Durch das Festlegen von Referenzpunkten werden unterschiedliche Installationsgeräte digital über ein angezeigtes Auswahlmenü bestimmt und in einer Datenbank gespeichert. Nach Festlegung der Produkt-IDs und Verbindungsarten werden die Verbindungsprozesse berechnet und dem Handwerker digital mit sämtlichen Verarbeitungselementen präsentiert. Jedes Verarbeitungselement enthält nicht nur die digitale Montageanweisung, sondern zeigt dem Handwerker schrittweise die erforderlichen Montageschritte und erklärt die entsprechenden Werkzeuge sowie deren Handhabung.

Künstliche Intelligenz (KI) unterstützt nicht nur bei der digitalen Montageanweisung, sondern überprüft und bewertet auch den gesamten Arbeitsablauf auf Richtigkeit, korrekte Handhabung und Einhaltung von Vorgaben. Die KI lernt während des Arbeitsprozesses den Ablauf, die Umsetzung und die Interaktion mit dem Handwerker. Alle gesammelten Daten werden dokumentiert und dienen der kontinuierlichen Optimierung der digitalen Montageanweisungen. Bei Bedarf integriert die KI auch andere digitale Geräte in den digital geführten Arbeitsprozess, wie beispielsweise Drohnen und Roboter.

Als Datennetz wird vorzugsweise ein Mobiltelefonnetz oder auch ein WLAN Netz verwendet. Die Verbindung zwischen Mini-PC und Datenbrille und/oder Datengerät ist dann vorzugsweise bidirektional ausgebildet.

Ein Ausführungsbeispiel der Erfindung ist in der Zeichnung dargestellt. Es zeigen:
- Figur 1:: eine perspektivische schematische Ansicht eines Raumes in einem Gebäude mit einem Handwerker,
- Figur 2:: eine schematische Ansicht des Teilbereichs des Raumes nach Figur 1 mit einer Teilansicht des Handwerkers

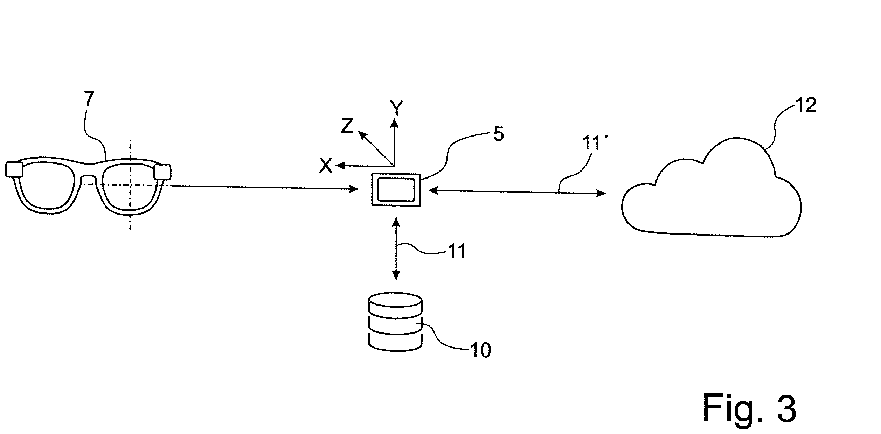

- Figur 3:: eine schematische Ansicht der für das erfindungsgemäße Verfahren verwendeten Bauteile einschließlich einer Datenbrille
- Figur 4:: eine maßstäblich vergrößerte Teilansicht der Datenbrille nach Figur 3, und
- Figur 5:: eine weitere maßstäblich vergrößerte Teilansicht der Datenbrille nach Figur 3 in einem anderen Anwendungsfall.

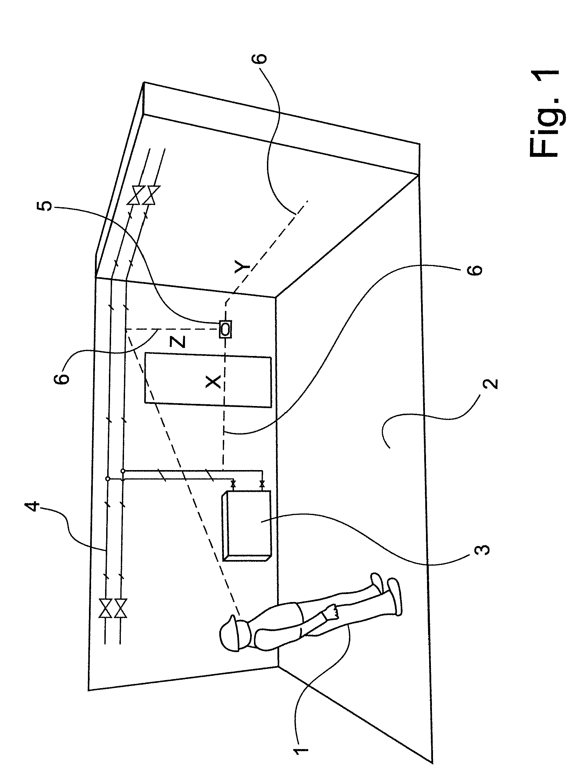

In Figur 1 steht ein Handwerker 1 auf dem Boden 2 eines schematisch angedeuteten Raumes in einem Gebäude auf. In diesem Raum soll ein Heizkörper 3 installiert werden, dieser Heizkörper 3 ist über Leitungen 4 mit anderen Heizkörpern beziehungsweise mit einem Heizkessel zu verbinden.

Der Boden 2 des Raumes bildet eine Grundebene aus. In einer Höhe oberhalb dieser Grundebene ist an einer Wand des Raumes ein Mini-Computer 5 angebracht. Dieser Mini-PC 5 kommuniziert mit dem Handwerker 1 über eine von dem Handwerker 1 getragene Datenbrille 7. Der Handwerker 1 kann in seiner Datenbrille 7 ausgehend vom Mini-PC 5 Hilfslinien 6 erkennen, nämlich eine x-, eine y- und eine z-Achse. Ausgehend von diesem Referenzpunkt sind in der Datenbrille 7 die Anordnung des Heizkörpers 3 und die Anordnung der Leitungen 4 erkennbar.

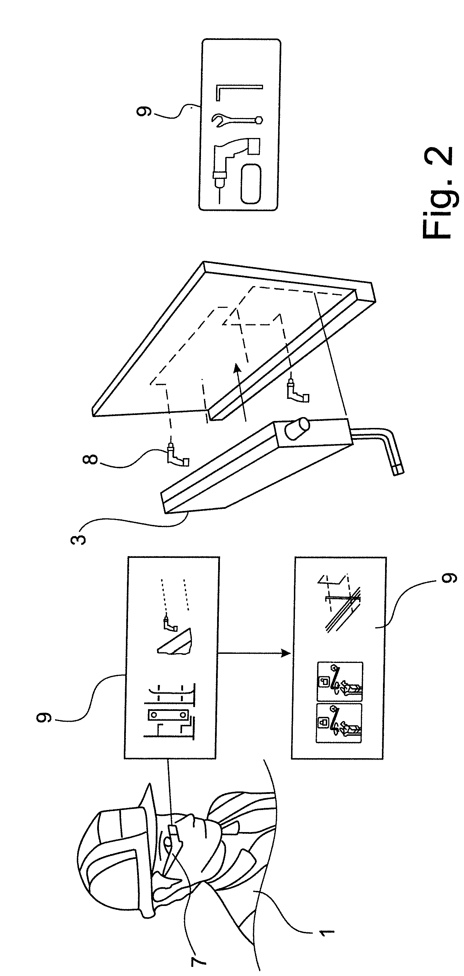

So zeigt Figur 2, dass in der Datenbrille 7 konkrete Ansetzpunkte für den Heizkörper 3 an der Wand des Raumes angegeben werden. Der Handwerker 1 erkennt in der Datenbrille 7, wo er eine Bohrmaschine 8 ansetzen muss, um den Heizkörper 3 zu befestigen. Die Datenbrille 7 ist mit einem Projektor ausgerüstet, der auf ein Glas der Datenbrille 7 projiziert. Die projizierten Darstellungen 9 können die einzelnen Arbeitsschritte darstellen, hinzu kommen die bei den Arbeiten verwendeten Werkzeuge.

Bei den Durchführungen der Arbeiten wird durch den Mini-PC 5 ein digitaler Meterstrich ausgebildet. Wird ein BIM 10 mit einer Datenbank verwendet, dann bildet dieser Mini-PC 5 eine digitale Schnittstelle zu dem BIM 10 aus. Im BIM 10 festgelegte Referenzpunkte können dann in der Datenbrille 7 dargestellt werden. Das BIM 10 kommuniziert mit dem Mini-PC 5, wie mit einem Doppelpfeil 11 dargestellt.

Der Mini-PC 5 ist zudem mit einer Cloud 12 verbunden, Doppelpfeil 11'. In der Cloud 12 können Datenbanken mit Expertenwissen enthalten sein. Es können Bauteile digital erfasst werden und digital verarbeitet werden. KI kann unterstützen durch Fehlererkennung und die Optimierung von Montageabläufen. Kl kann kontrollieren, prüfen und sichern.

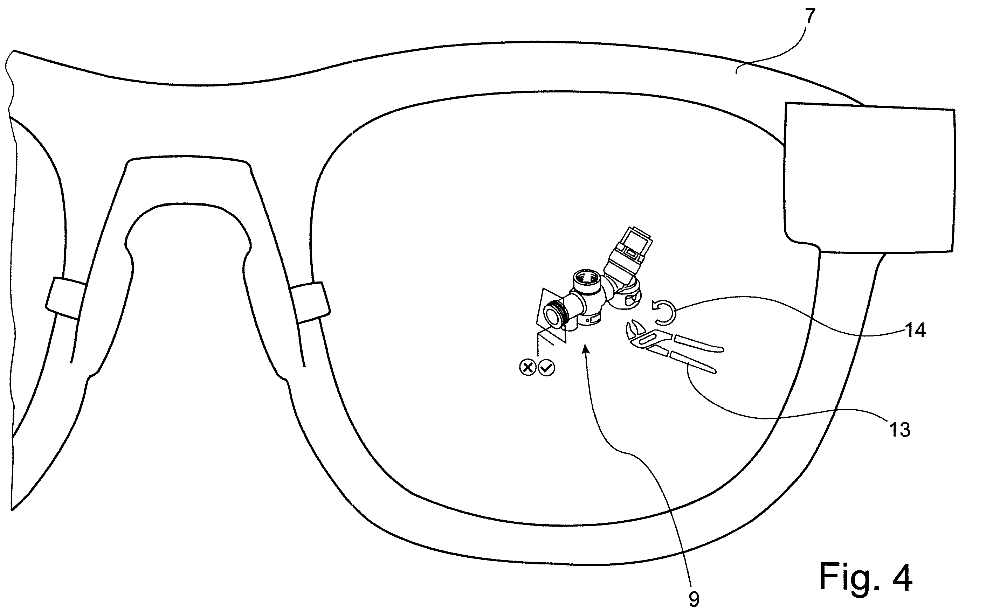

Figur 4 zeigt die Datenbrille 7 und projektierte Darstellungen 9. Diese zeigen hier ein Werkstück, es wird gezeigt, wie ein weiteres Werkstück anzusetzen ist, welches Werkzeug einzusetzen ist und mit welcher Drehrichtung. Dazu ist eine Rohrzange 13 gezeigt und ein Pfeil 14 entgegen dem Uhrzeigersinn

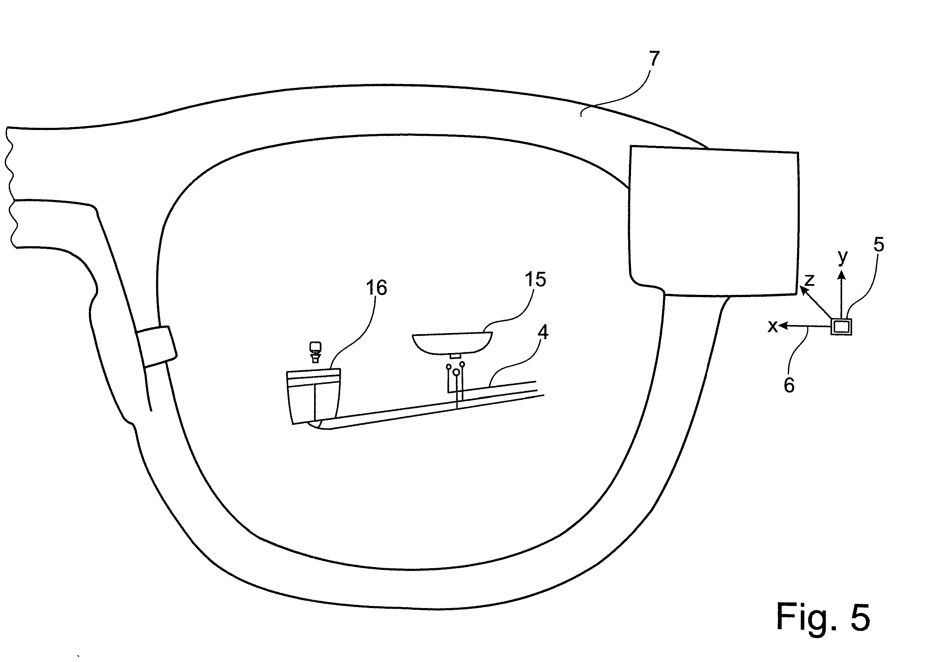

Die Datenbrille 7 kann aber auch dann eingesetzt werden, wenn kein BIM verwendet wird, Figur 5. Dann werden in der Datenbrille 7 ausgehend vom Mini-PC 5 und den Hilfslinien 6 Anordnungen für einen Waschtisch 15 und ein WC 16 aufgezeigt. Auch die notwendigen Leitungen 4 werden dargestellt und können von dem Handwerker 1 ortsgerecht montiert werden.

## Patentansprüche

1. Verfahren zum Ausführen von Handwerkerarbeitsleistungen auf einer Baustelle im Bereich zumindest eines Gebäudes, bei dem oberhalb einer Grundebene des Gebäudes an dem Gebäude zumindest eine Markierung angebracht wird,
**dadurch gekennzeichnet,**
**dass** auf die Markierung oder anstelle der Markierung ein Mini-Personalcomputer (5) an dem Gebäude angebracht wird, der über ein Datennetz mit zumindest einer Datenbrille (7) verknüpft ist, die von einem Handwerker (1) im Baustellenbereich getragen wird.

2. Verfahren nach Anspruch 1, **dadurch gekennzeichnet, dass** der Mini-PC (5) mit einem Handheld-Datengerät verknüpft wird.

3. Verfahren nach Anspruch 1 oder 2, **dadurch gekennzeichnet, dass** ausgehend vom Mini-PC (5) in Datenbrille (7) und/oder Datengerät Hilfslinien (4), vorzugsweise x-, y- und z-Achsen, dargestellt werden.

4. Verfahren nach einem der Ansprüche 1 bis 3, **dadurch gekennzeichnet, dass** eine Datenbrille (7) mit einem Projektor mit Projektion auf einen Bereich zumindest eines Brillenglases zum Darstellen von einzubauenden Werkstücken verwendet wird.

5. Verfahren nach Anspruch 4, **dadurch gekennzeichnet, dass** eine Datenbrille (7) mit einem Projektor mit Projektion auf einen Bereich zumindest eines Brillenglases zum Darstellen von einzusetzenden Werkzeugen verwendet wird.

6. Verfahren nach einem der vorhergehenden Ansprüche, **dadurch gekennzeichnet, dass** der Mini-PC (5) mit Expertennetzen mit BIM (10) und mit KI verknüpft wird.

7. Verfahren nach einem der vorhergehenden Ansprüche, **dadurch gekennzeichnet, dass** die Verbindung zwischen Mini-PC (5) und Datenbrille (7) / Datengerät bidirektional ausgebildet wird.

8. Verfahren nach einem der vorhergehenden Ansprüche, **dadurch gekennzeichnet, dass** als Datennetz ein Mobiltelefonnetz, WLAN-Netz oder Bluetooth-Netz benutzt wird.
